# EUROPEAN PATENT SPECIFICATION

(11) **EP 0 466 108 B1**
(45) Date of publication and mention of the grant of the patent: **08.02.1995**
(21) Application number: 91111424.7
(22) Date of filing: 09.07.1991
(51) Int. Cl.: H02G 1/00, H02G 3/18

(54) **Apparatus for locating elements installed in hidden position, in particular for underfloor installed cable switching boxes**
Vorrichtung zum Aufspüren von Elementen in nichtzugänglichen Plätzen, insbesondere für im Fussboden installierte Kabelverteilerdosen
Dispositif pour localiser des éléments installés dans une position cachée, en particulier pour boîtes électriques installés au sous-sol

(30) Priority: 13.07.1990 IT 2092690
(43) Date of publication of application: 15.01.1992
(73) Proprietor: Preziati, Ernesto, 20061 Carugate (Milano) (IT)
(72) Inventor: Preziati, Ernesto, 20061 Carugate (Milano) (IT)
(74) Representative: Lunati, Vittoriano

(56) References cited:
- DE-B- 1 021 451
- GB-A- 2 066 587

## Description

The present invention has for its subject matter an apparatus for locating elements installed in hidden position, in particular for underfloor installed cable switching boxes, in buildings, and establishing connection points for various services. Such an apparatus is defined in the preamble of the accompanying Claim 1 and it is known, for example, from DE-B-1021451.

As it is known, actually the underfloor installation of electric systems, telephone systems and special systems, e.g. for the transmission of video signals or data among computers is widely diffused in offices of great dimensions. The underfloor installation allows to get an optimal distribution of the various service points and it is made at the moment of the fulfilment or betterment of a building arranging various elements onto the floor roughs or still raw floors.

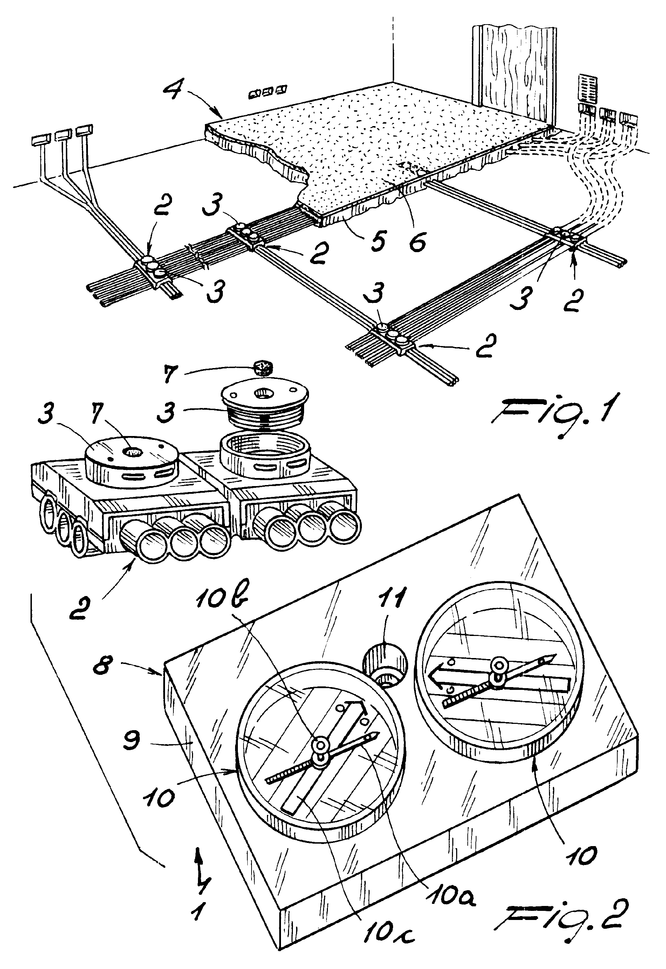

In particular there are provided proper channels for the housing of cables, located for forming lines or links suitably sized and spaced, and switching boxes of the same channels, in conjuction of crossings of links or lines. The annexed Figure 1 shows a lay-out of said type.

Said switching boxes are e.g. of the type teached-in by the italian patent No. 206.678 in the name of the Applicant.

The connections to the electric power and/or telephone lines and/or computer connecting lines are provided over these switching boxes.

Some of these boxes are immediately joined with elements installed in vertical direction that make the proper connections completely accessible and ready for use over the floors.

Nevertheless, in many cases the boxes are closed by proper detachable covers and hidden, awaiting an eventual use thereof.

The hiddening is carried out by means of the finishing of floors, e.g. with a concrete casting onto the floor roughs and/or the prearrangement for the surface finishing of the floors.

As shown still in Figure 1, very often the boxes are laid over the floor roughs so that, using a concrete casting, the level of floors reaches the top part of the detachable covers of boxes, without covering it, and a moquette or similar covering is applied at this level.

In this situation the unused connection points and boxes are completely hidden and protected, getting evident advantages of safety and protection of the systems and a good aesthetic level of the rooms. Further in this manner unseful obstacle or accident points are avoided.

In the same time it is always possible to restore the hidden and protected connection points, even if this operation requires relatively laborious and delicate works.

In fact a drawback of this situation is that it is not easy to locate with precision and safety the positions where underfloor elements are provided, and that the restoring thereof can cause damages greather than necessary in the surface finishing of floors.

Further it is necessary to consider that the prearrangement of underfloor elements is carried out during an erection phase mainly of masonry type in an ambient that is still very raw. Therefore a certain inaccuracy is unavoidable. Incidentally this inaccuracy can be added to real position errors.

Further again, it can occur that the people who make the restoring of underfloor connection points is not provided with project data of the systems, specially if these systems were made since many years.

In pratice for locating e.g. the position of detachable covers of above mentioned boxes, covered by a simple moquette, it is necessary to work as follows.

At first it is located the position where, at least approximatively, it is supposed the presence of a underfloor box, with the related detachable cover immediately under the covering of the same floor. Then, using a hammer or equivalent tool, the floor is striked in many points for locating, according to the caused sound, the position of the detachable cover.

When it is thought, according to the different sound, to have located the exact point, the covering is cut using a blade, to lift a little edge thereof and controlling by visual means the presence of the detachable cover.

If the location is wrong, it is necessary to position again the lifted edge with approximative means and make new search attempts.

If the location is exact, it is also necessary to establish exactly the edges or the centre of the cover, for allowing a precise removal of floor covering overhanging the cover. If the removal is not exact or is excessive, it remains in view a part of the underlying concrete casting that surrounds the cover.

It must be noticed that if the underfloor elements are hidden not only by a surface lining, but also by a thin concrete stratum or by a tile, the rebuilding operations are more complex and can cause great damages if they are not made very accurately.

DE-B-1021451, concerning an apparatus for locating elements installed in hidden positions, in particular for cable switching boxes installed in the walls, discloses permanent magnets placed in the elements to be located, and a compass. The compass is sensitive to the magnetic field of the magnets and therefore it is able to locate the elements installed in hidden positions.

The detecting operations are laborious, because the compass needle shows only one direction and it does not disclose the distance of a permanent magnet.

Therefore several control are necessary to find the zone where a permanent magnet is placed, and when this zone is found the magnet is located only in a rough manner, along the axis of the compass needle.

Therefore it is not solved the technical problem of allowing the right and sure location of the elements installed in hidden position in the buildings.

The technical aim of the present invention is to supply an apparatus suitable for solving said technical problem.

The specified technical aim is substantially achieved by an apparatus for locating elements installed in hidden position, in particular underfloor installed cable switching boxes of the type claimed in claim 1. The preferred embodiments of the invention are specified in the subsequent claims.

Further features and advantages of the invention shall appear better in the following detailed description of an apparatus according to the invention, shown in the annexed drawings, in which:
**Figure 1** shows how the systems supplied with switching boxes that are hidden under a floor are made;
**Figure 2** shows the apparatus elements according to the invention;
**Figure 3** shows in a section view the apparatus in general view in operative position, and
**Figures 4, 5, 6, 7** show the apparatus use.

Making reference to the mentioned figures, the apparatus according to the invention is generally indicated by the reference number **1**.

It is shown applied on elements to be located made up of underfloor embedded cable switching boxes, indicated by **2** and used e.g. for the fulfilment of underfloor systems of the type shown in Figure **1**.

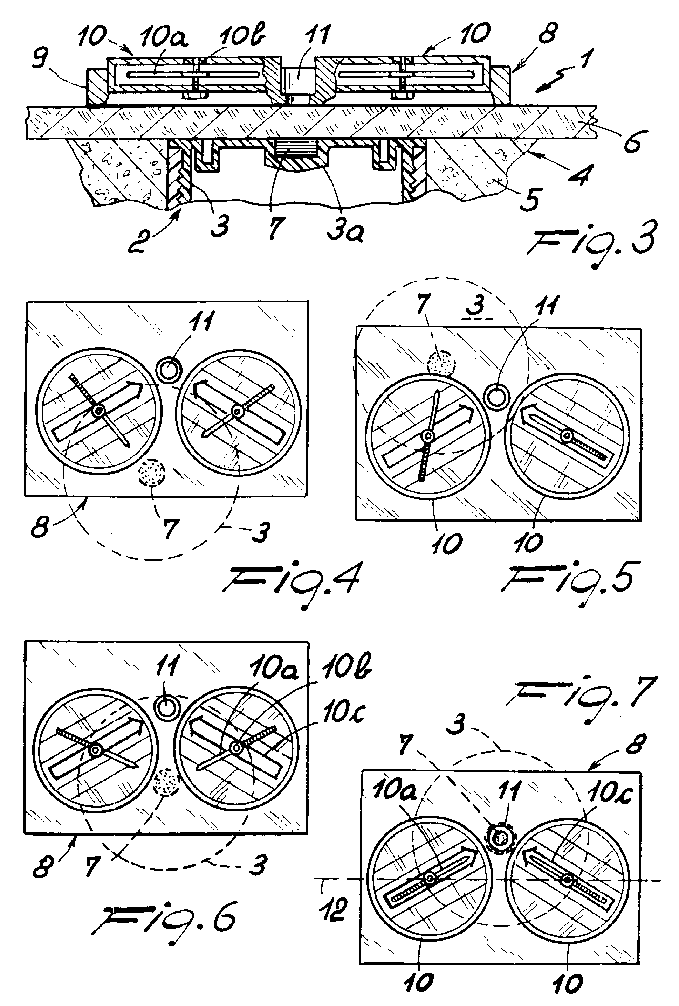

The boxes 2 have superior detachable covers **3** (Figure 2) engageable and disengageable by screwing and the same boxes 2 are hidden and protected into a floor **4** until the edge of detachable covers **3** by means of a concrete casting **5**. Then the casting **5** and the detachable covers **3** are covered, in the case shown in Figure 1, by a surface lining **6** made up of a moquette.

The apparatus **1** includes signaling members **7** generating a magnetic field and foreseen fixed in conjuction with the elements to be located.

The signaling members 7 are permanent magnets shaped in a cylindrical form, each thereof being centrally fixed to one of the elements to be located, in conjuction with a zone of the same element having a lower hiddening level. In the described case the permanent magnets are engaged in the central zone of the detachable covers 3, as indicated in Figures 2 and 3.

The Figure 3 shows in a section view that each detachable cover 3 is supplied with a prevalently embedded seat **3a** and sized for housing exactly a magnet.

The apparatus 1 is further supplied with a mobile detecting device **8** that includes a support element **9** and two indicators **10**. These indicators are compasses supplied with needles **10a** turning onto pins **10b** and engaged to the support element 9 in positions coplanar and spaced with one another and they are equally sensible to the magnetic field of signaling members or permanent magnets 7.

The support element 9 is a transparent plate, housing the indicators 10, also these having a transparent housing, and it can be moved manually.

The support element 9 holds also marking means **11** equispaced from the indicators or compasses 10 and foreseen for the application of markings onto the floor 4, at the signaling members 7.

Said marking means 11 is located equidistant from the indicators 10 and spaced from a transversal line **12** (Figure 7) that joins the pins or centres 10b of the indicators 10. The preferred position is the intersection point of two directing lines passing by the pins 10b and angularly spaced by approximatively 30° with respect to the transversal line 12.

These directing lines coincide substantially with guide pointers 10c directed towards the marking means 11 and obtained under the needles 10a.

These guide pointers 10c are arrows that simulate the position of needles 10a when the same needles indicate said marking means 11, for making easier the control of the gauge from this position.

Preferably the marking means 11 is not active means and is made up by a hole made into the support element 9 suitable for guiding a proper element: in particular a writing element such as a pencil or a chalk or a twist drill or other one.

The operating of the apparatus is the following.

At the moment of the installation of underfloor systems, there are used elements to be located, in particular boxes 2, supplied with signaling members 7, that is to say the permanent magnets.

In the following the elements 2 are hidden and protected under a floor, but even if completely covered, the magnets remain activated and their magnetic field can be measured at a certain distance therefrom.

When the elements 2 must be activated again, the position of the magnets can be located with absolute precision by means of the detecting apparatus 8.

In fact, when the needles 10a are located within a magnetic field they indicate the centre of the magnetic field and when both needles indicate that this centre is at with the marking means 11 (Figure 7), the same marking means can be used for applying a marking onto the floor.

The Figures from 4 to 6 show clearly an important feature of the invention: the search of the final position of Figure 7 does not occur by casual attempts, but it is guided by the needles.

In fact these needles indicate always the position of underlying magnet and therefore an operator, extending ideally the directions of the needles until its intersection, realizes immediately the exact position of the magnet. Therefore he can move the apparatus 8 for overlapping the marking means 11 to the magnet.

Once it is known the centre of the element to be located, all operations can be made precisely, removing accurately as minimum quantity of covering as possible.

The invention achieves important advantages.

In fact the reactivation phase of hidden elements can be made quickly with the maximum safety and precision, avoiding any damage of the floors.

The invention can be applied to the more different types of elements installed in protected and hidden position into floors, walls or other elements of the buildings.

The indicators 10 can be more than two in number and the marking means 10 can be of active type, instead of being a simple guide or hole.

## Claims

1. An apparatus for locating elements installed in hidden position, in particular for underfloor installed cable switching boxes, including: permanent magnets (7) placed in the elements (2) to be located, said permanent magnets (7) acting as signaling members, and a mobile detecting device (8) sensitive to the magnetic field of said permanent magnets (7), characterized in that said mobile detecting device (8) includes: a support element (9), at least two compasses (10) sensitive to said magnetic field and engaged to said support element (9), and marking means (11) engaged to said support element (9) in a position substantially intermediate between said compasses (10), said marking means (11) being suitable for applying markings.

2. An apparatus according to Claim 1, wherein said two compasses (10) have the same sensibility.

3. An apparatus according to Claim 2, wherein said compasses (10) are engaged on said support element (9) in positions coplanar and spaced with one another.

4. An apparatus according to Claim 2, wherein said support element (9) is a transparent plate, housing said compasses (10).

5. An apparatus according to Claim 2, wherein said marking means (11) is positioned substantially equidistant from said compasses (10) and spaced from a transversal line joining centres (10b) of said compasses (10).

6. An apparatus according to Claim 5, wherein said marking means (11) is made up by a hole made in said support element (9).

7. An apparatus according to Claim 5, wherein said compasses (10) have guide pointers (10c) directed from said compasses (10) towards said marking means (11).

## Patentansprüche

1. Vorrichtung zum Aufspüren von Elementen in nichtzugänglichen Plätzen, insbesondere für im Fussboden installierte Kabelverteilerdosen, bestehend aus in den aufzuspürenden Elementen (2) angebrachten Dauermagneten (7), wobei die genannten Dauermagneten (7) als Anzeigeorgane dienen, und eine auf das Magnetfeld der genannten Dauermagneten (7) ansprechende bewegliche Detektorvorrichtung (8), dadurch gekennzeichnet, daß die genannte bewegliche Detektorvorrichtung (8) ein Lagerelement (9) umfaßt sowie zumindest zwei auf das genannte Magnetfeld ansprechende an dem genannten Lagerelement (9) angebrachte Kompässe (10) und ein sich im wesentlichen zwischen den gennanten Kompässen (10) befindliches, an dem genannten Lagerelement (9) angebrachtes Markierungsmittel (11), wobei sich das genannte Markierungsmittel (11) zur Anbringung von Markierungen eignet.

2. Vorrichtung nach Anspruch 1, wobei die zwei genannten Kompässe (10) dieselbe Empfindlichkeit aufweisen.

3. Vorrichtung nach Anspruch 2, wobei die genannten Kompässe (10) in koplanaren Positionen in gewissen Abständen voneinander an dem genannten Lagerelement (9) angebracht sind.

4. Vorrichtung nach Anspruch 2, wobei es sich bei dem genannten Lagerelement (9) um eine der Aufnahme der gennanten Kompässe (10) dienende transparente Platte handelt.

5. Vorrichtung nach Anspruch 2, wobei das genannte Markierungsmittel (11) in im wesentlichen gleichen Abständen von den genannten Kompässen (10) angebracht und von einer die Mittelpunkte (10b) der genannten Kompässe (10) verbindende Querlinie beabstandet ist.

6. Vorrichtung nach Anspruch 5, wobei das genannte Markierungsmittel (11) aus einem in dem genannten Lagerelement (9) angebrachten Loch besteht.

7. Vorrichtung nach Anspruch 5, wobei die genannten Kompässe (10) Zeiger (10c) aufweisen, welche von den genannten Kompässen auf das Markierungsmittel (11) weist.

## Revendications

1. Dispositif pour localiser des éléments installés dans une position cachée, en particulier pour boîtes électriques installées au sous-sol, comprenant: des aimants permanents (7) placés dans les éléments (2) à localiser, lesdits aimants permanents (7) agissant en tant qu'organes de signalisation, et un dispositif de détection (8) mobile, sensible au champ magnétique desdits aimants permanents (7), caractérisé en ce que ledit dispositif de détection (8) comporte: un élément de support (9), au moins deux boussoles (10) sensibles audit champ magnétique et engagées audit élément de support (9), et des moyens de marquage (11) engagés audit élément de support (9) à une position sensiblement intermédiaire entre lesdites boussoles (10), lesdits moyens de marquage (11) étant destinés à appliquer des marques.

2. Dispositif selon la revendication 1, caractérisé en ce que lesdites deux boussoles (10) ont la même sensibilité.

3. Dispositif selon la revendication 2, caractérisé en ce que lesdites boussoles (10) sont engagées sur ledit élément de support (9) à des positions coplanaires et espacées l'une de l'autre.

4. Dispositif selon la revendication 2, caractérisé en ce que ledit élément de support (9) est une plaque transparente, logeant lesdites boussoles (10).

5. Dispositif selon la revendication 2, caractérisé en ce que lesdits moyens de marquage (11) sont positionnés sensiblement équidistants desdites boussoles (10) et espacés d'une ligne transversale joignant les centres (10b) desdites boussoles (10).

6. Dispositif selon la revendication 5, caractérisé en ce que lesdits moyens de marquage (11) comportent un trou ménagé dans ledit élément de support (9).

7. Dispositif selon la revendication 5, caractérisé en ce que lesdites boussoles (10) ont des aiguilles de guidage (10c) dirigées à partir desdites boussoles (10) vers lesdits moyens de marquage (11).
